# EUROPÄISCHE PATENTSCHRIFT

(11) **EP 3 915 227 B1**
(45) Veröffentlichungstag und Bekanntmachung des Hinweises auf die Patenterteilung: **21.06.2023**
(21) Anmeldenummer: 20700700.6
(22) Anmeldetag: 13.01.2020
(51) Int. Cl.: H04L 12/40

(54) **SENDE-/EMPFANGSEINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
TRANSMITTING/RECEIVING DEVICE FOR A SUBSCRIBER STATION OF A SERIAL BUS SYSTEM, AND METHOD FOR COMMUNICATION IN A SERIAL BUS SYSTEM
DISPOSITIF D'ÉMISSION/RÉCEPTION POUR UN POSTE D'ABONNÉ D'UN SYSTÈME DE BUS SÉRIE ET PROCÉDÉ DE COMMUNICATION DANS UN SYSTÈME DE BUS SÉRIE

(30) Priorität: 24.01.2019 DE 102019200906
(43) Veröffentlichungstag der Anmeldung: 01.12.2021
(73) Patentinhaber: Robert Bosch GmbH, 70442 Stuttgart (DE)
(72) Erfinder: KOENIG, Timo, 74199 Unterheinriet (DE); WALKER, Steffen, 72770 Reutlingen (DE); WEISSENMAYER, Simon, 74223 Flein (DE)
(86) Internationale Anmeldenummer: PCT/EP2020/050691
(87) Internationale Veröffentlichungsnummer: WO 2020/151980

(56) Entgegenhaltungen:
- EP-A1- 3 404 873
- US-A1- 2002 196 884
- JAVIER DIAZ ET AL: "CAN bus embedded system for lighting network applications", CIRCUITS AND SYSTEMS, 2008. MWSCAS 2008. 51ST MIDWEST SYMPOSIUM ON, IEEE, PISCATAWAY, NJ, USA, 10. August 2008 (2008-08-10), Seiten 531-534, XP031315284, ISBN: 978-1-4244-2166-7
- "Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056, [gefunden am 2010-11-18]

## Beschreibung

### Technisches Gebiet

Die vorliegende Erfindung betrifft eine Sende-/Empfangseinrichtung für eine Teilnehmerstation eines seriellen Bussystems und ein Verfahren zur Kommunikation in einem seriellen Bussystem.

### Stand der Technik

Zur Kommunikation zwischen Sensoren und Steuergeräten wird, beispielsweise in Fahrzeugen, immer häufiger ein Bussystem eingesetzt, in welchem Daten als Nachrichten im Standard ISO11898-1:2015 als CAN Protokoll-Spezifikation mit CAN FD übertragen werden. Die Nachrichten werden zwischen den Teilnehmerstationen des Bussystems, wie Sensor, Steuergerät, Geber, usw., übertragen. Hierbei wird CAN FD derzeit in der Einführungsphase im ersten Schritt meist mit einer Daten-Bitrate von 2Mbit/s bei der Übertragung von Bits des Datenfelds und mit einer Arbitrations-Bitrate von 500kbit/s bei der Übertragung von Bits des Arbitrationsfelds im Fahrzeug eingesetzt.

EP 3 404 873 A1 zeigt einen Datenbusempfänger für einen CAN Bus, der einen Bitstrom mit geringerer Spannung als bei CAN üblich verarbeiten soll. Der Datenbusempfänger wertet einen Identifizierer einer Nachricht aus, um zu bestimmen, ob die Nachricht von dem Datenbusempfänger weiter empfangen werden soll oder nicht. Eine darauffolgende Auswertung, ob in der Nachricht Daten enthalten sind, die empfangen werden sollen, oder Daten in die empfangene Nachricht einzufügen sind, ist nicht gezeigt. Dies gilt auch für die US 2002/0196884 A1, die ein Verfahren und eine Vorrichtung zum Bewirken einer Synchronpulserzeugung für serielle Kommunikation mit variabler Geschwindigkeit zeigt, die bei einer USB-Schnittstelle verwendbar ist. Hierzu ist eine serielle Schnittstellenmaschine beschrieben.

Im CAN Bussystem werden Nachrichten in ein Sendesignal TX codiert und als ein differenzielles Signal VDIFF über den Bus des Bussystems übertragen, indem Signale CAN_H und CAN_L auf zwei Busleitungen des Busses eingespeist werden. Das differentielle Signal VDIFF = CAN_H - CAN_L wird von einer Sende- / Empfangseinrichtung einer Teilnehmerstation des Bussystems empfangen und aufbereitet, so dass die Sende- / Empfangseinrichtung an Ihrem Anschluss RX ein dem differenziellen Signal VDIFF entsprechendes Empfangssignal RX für einen CAN Mikrocontroller zur Verfügung stellt. Der CAN Mikrocontroller wertet das Empfangssignal RX aus und gibt die daraus gewonnenen Daten an Endstufen für Verbraucher bzw. mindestens eine Last weiter, wie Scheibenwischer, Fensterheber, Regensensor, usw.. Außerdem kann der CAN Mikrocontroller je nach Bedarf das Sendesignal TX erstellen, welches er über einen Anschluss TX an die Sende- / Empfangseinrichtung weiterleitet. Die Sende-/ Empfangseinrichtung kann aus dem Sendesignal TX die differentiellen Signale CAN_H und CAN_L erzeugen und auf den Bus senden.

Im einfachsten Fall besteht die Aufgabe des CAN Mikrocontrollers darin, die Schaltzustände der Endstufen für die Verbraucher zu erfassen und die Werte der Schaltzustände über den CAN Bus an andere Teilnehmerstationen des Bussystems zu versenden oder aufgrund von Daten empfangener Nachrichten Endstufen und damit Verbraucher anzusteuern.

Soll beispielsweise in einem Fahrzeug zwischen mehreren Sensoren und/oder Aktoren kommuniziert werden, die an unterschiedlichen Stellen des Fahrzeugs angeordnet sind, wie beispielsweise verschiedene Fensterheber usw., so müssen die Daten über ein verzweigtes Netzwerk versandt werden. Damit alle Teilnehmer miteinander kommunizieren können, bietet sich das CAN-Protokoll an, das jedoch aufgrund des relativ komplexen Protokolls an allen Sensoren und Aktoren einen Mikrocontroller benötigt, um die Nachrichten auszuwerten und dann die Sensoren oder Aktoren anzusteuern bzw. deren Daten an andere Netzwerkteilnehmer weiterzugeben. Da derartige Mikrocontroller relativ teuer sind, und jeder Mikrocontroller regelmäßig Updates seiner Software benötigt, ist eine Alternative gefordert, welche die Kommunikation von Sensoren und Aktoren über das Netzwerk vereinfacht und vergünstigt.

### Offenbarung der Erfindung

Daher ist es Aufgabe der vorliegenden Erfindung, eine Sende-/Empfangseinrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Sende-/Empfangseinrichtung für eine Teilnehmerstation eines seriellen Bussystems und ein Verfahren zur Kommunikation in einem seriellen Bussystem bereitgestellt werden, bei welchen die Kommunikation von Sensoren und Aktoren über das Bussystem in Hinblick auf die Leistungsfähigkeit und die Kosten optimiert werden kann.

Die Aufgabe wird durch eine Sende-/Empfangseinrichtung für eine Teilnehmerstation eines Bussystems mit den Merkmalen von Anspruch 1 gelöst. Die Sende-/Empfangseinrichtung hat einen Empfänger zum seriellen Empfang einer Nachricht von einem Bus des Bussystems, einen Auswerteblock zur Auswertung, ob die empfangene Nachricht für die Teilnehmerstation bestimmt ist und somit entweder Daten der empfangenen Nachricht von der Teilnehmerstation zu empfangen sind oder von der Sende-/Empfangseinrichtung in die empfangene Nachricht Daten der Teilnehmerstation einzufügen und auf den Bus zu senden sind, und einen ersten Anschluss zur seriellen Ausgabe eines Signals für die Teilnehmerstation auf der Grundlage der Auswertung des Auswerteblocks, wobei der Auswerteblock ausgestaltet ist, an dem ersten Anschluss immer eine Signalflanke auszugeben, wenn die empfangene Nachricht für die Teilnehmerstation bestimmt ist und in den Daten der empfangenen Nachricht derzeit ein Daten-Bit ansteht oder von der Sende-/Empfangseinrichtung in die empfangene Nachricht ein Daten-Bit der Daten einzufügen ist, wie in Anspruch 1 beschrieben.

Die beschriebene Sende-/Empfangseinrichtung ermöglicht, dass nur ein leistungsfähiges Zentralsteuergerät und möglichst wenige Domänensteuergeräte vorhanden sind, die möglichst viele Sensoren und/oder Aktoren direkt auslesen und ansteuern können. Dadurch gibt es Funktionssteuergeräte nahe der Sensoren und/oder Aktoren nur noch an den Stellen, an denen besonders hohe Anforderungen an die Echtzeitfähigkeit gestellt werden.

Als Folge davon sinken die Hardwarekosten des Bussystems, da die Aktoren und Sensoren auf einen teuren Mikrokontroller (pC) verzichten können. Dadurch sind mit CAN vermehrt Aktoren und Sensoren in die elektrisch-elektronische Architektur (E/E-Achitektur) integrierbar, wodurch es einfacher ist, leichtere Kabelbäume und Architekturen mit besonders leistungsfähigem Zonen- und Zentralsteuergerät zu realisieren.

Darüber hinaus ist es möglich, im Betrieb des Bussystems Energie zu sparen, da auch von Steuergeräten, die im Energiesparmodus sind, Sensorwerte ausgelesen und/oder Aktoren angesteuert werden können. Dies ist möglich, ohne dass deren Steuergerät (Controller) aufgeweckt werden muss und dadurch die Steuergeräte den Energiesparmodus verlassen müssen. Außerdem können Systemzustände von komplexen Steuergeräten, die viele Controller, Prozessoren und Switches (Schaltern) haben, abgefragt werden, ohne dass ein Steuergerät (Controller), das die reguläre CAN-Kommunikation übernimmt, eingeschaltet sein muss.

Noch dazu ist durch die Ausgestaltung der Sende-/Empfangseinrichtung eine bessere Diagnose möglich, da bei einem fehlerhaften Controller - falls vorhanden - die Ursache für den Fehler leichter ermittelt werden kann. Dadurch können die anderen Steuergeräte gezielter und angepasster darauf reagieren. Außerdem wird dadurch die Fehlersuche vereinfacht.

Ein weiterer Vorteil liegt darin, dass bei den Aktoren und/oder Sensoren kein Softwareupdate notwendig ist, da die gesamte Software-Intelligenz in den Steuergeräten sitzt, von denen die Aktoren und/oder Sensoren angesteuert werden. Dadurch ist eine einfachere Wartung möglich.

Insgesamt ergibt sich aus der Ausgestaltung der Sende-/Empfangseinrichtung eine höhere Verfügbarkeit der Sensoren und/oder Aktoren, da die Sensoren und/oder Aktoren auch dann ausgelesen und angesteuert werden können, wenn - falls vorhanden - der Controller wegen eines Fehlers zurückgesetzt wurde, mit anderen Worten, sich im Reset befindet.

Die beschriebene Ausgestaltung der Sende-/Empfangseinrichtung schafft im Vergleich zu beispielsweise einem LIN-Bussystem die Option, mehr Daten zu übertragen und damit mehr Teilnehmer am gleichen Bus anzuschließen. Außerdem sind durch die beschriebene Ausgestaltung der Sende-/Empfangseinrichtung die Latenzzeiten kürzer.

Vorteilhafte weitere Ausgestaltungen der Sende-/Empfangseinrichtung sind in den abhängigen Ansprüchen angegeben.

Optional hat die Sende-/Empfangseinrichtung zudem einen zweiten Anschluss zur seriellen Ausgabe an die Teilnehmerstation eines seriellen digitalen Empfangssignals, das der Empfänger aus der vom Bus empfangenen Nachricht erzeugt hat.

Denkbar ist, dass der Auswerteblock ausgestaltet ist, an dem ersten Anschluss immer keine Signalflanke auszugeben, wenn in den Daten der empfangenen Nachricht derzeit ein Stuff-Bit ansteht.

Möglicherweise hat die Sende-/Empfangseinrichtung zudem einen Speicherblock zur Speicherung mindestens eines Teilnehmerstation-Identifizierers, der eine Nachricht spezifiziert, die für die Teilnehmerstation bestimmt ist, wobei der Auswerteblock zur Auswertung, ob die Nachricht für die Teilnehmerstation bestimmt ist, einen Identifizierer der Nachricht mit dem mindestens einen Teilnehmerstation-Identifizierer vergleicht.

Gemäß einer Option hat die Sende-/Empfangseinrichtung zudem einen dritten Anschluss zur Ausgabe an eine Kommunikationsschnittstelle der Teilnehmerstation einer Signalflanke, die einen fehlerfreien Empfang der Nachricht in der Sende-/Empfangseinrichtung bestätigt, und zudem einen vierten Anschluss zur Ausgabe an die Kommunikationsschnittstelle einer Signalflanke, die einen nicht fehlerfreien Empfang der Nachricht in der Sende-/Empfangseinrichtung anzeigt.

Gemäß einem Ausführungsbeispiel hat die Sende-/Empfangseinrichtung zudem einen fünften Anschluss zur Eingabe eines seriellen digitalen Sendesignals von der Teilnehmerstation, einen Sender zum seriellen Senden einer Nachricht auf einen Bus des Bussystems auf der Grundlage des seriellen digitalen Sendesignals oder mit den in die Nachricht eingefügten Daten der Teilnehmerstation, wobei der erste Anschluss zur seriellen Eingabe eines Signals von einer Kommunikationsschnittstelle der Teilnehmerstation vorgesehen ist,, wie in den Ansprüchen beschrieben.

Die zuvor beschriebene Sende-/Empfangseinrichtung kann Teil einer Teilnehmerstation für ein Bussystem sein, die zudem eine Kommunikationsschnittstelle aufweist, die an den ersten und zweiten Anschluss angeschlossen ist.

Möglicherweise hat die Kommunikationsschnittstelle einen Deserializer, der an den ersten und/oder zweiten Anschluss der Sende-/Empfangseinrichtung angeschlossen ist und zum Deserialisieren des Empfangssignals auf der Grundlage des Signals von dem ersten Anschluss ausgestaltet ist, eine Anschalt-Schaltung zum Einschalten oder Ausschalten mindestens einer Endstufe für mindestens einen elektrischen Verbraucher auf der Grundlage eines Daten-Bits des Empfangssignals, das von dem Deserializer an die Anschalt-Schaltung ausgegeben wird.

Optional hat die Kommunikationsschnittstelle zudem eine Deaktivierungs-Schaltung zur Deaktivierung der mindestens einen Endstufe, wenn der Auswerteblock für eine vorbestimmte Zeit keine Nachricht als für die Teilnehmerstation bestimmt auswertet, und eine Rücksetz-Schaltung zum Zurücksetzen des Deserializers, wenn an dem dritten Anschluss ein Bit vollständig übertragen wurde, das einen fehlerfreien Empfang der Nachricht bestätigt oder wenn an dem vierten Anschluss ein Bit einen nicht fehlerfreien Empfang der Nachricht anzeigt.

Optional hat die Teilnehmerstation zudem einen Serializer, der an den ersten und fünften Anschluss der Sende-/Empfangseinrichtung angeschlossen ist und zum Serialisieren von mindestens zwei Sensorwerten auf der Grundlage des Signals von dem ersten Anschluss ausgestaltet ist, wie in den Ansprüchen beschrieben. Hierbei können die mindestens zwei Sensorwerte analoge oder digitale Sensorwerte sein.

Optional hat die Teilnehmerstation zudem einen Controller zum Erzeugen und Senden des Sendesignals für Nachrichten an die Sende-/Empfangseinrichtung und zum Empfangen und Auswerten von Nachrichten von der Sende-/Empfangseinrichtung, wobei der Controller an die Kommunikationsschnittstelle angeschlossen ist, so dass die Spannungsversorgung des Controllers nur eingeschaltet wird, wenn die derzeit vom Bus empfangene Nachricht für die Teilnehmerstation bestimmt ist. Hierbei kann die Kommunikationsschnittstelle derart an den Controller angeschlossen sein, dass mindestens eine Zustandsgröße des Controllers erfasst und optional beeinflusst wird, wie in den Ansprüchen beschrieben.

Der Controller kann ausgestaltet sein, das Sendesignal derart zu erzeugen und/oder die Sende-/Empfangseinrichtung kann ausgestaltet sein die Nachrichten derart zu erzeugen, dass in der ersten Kommunikationsphase zum Senden der Nachrichten auf den Bus zwischen den Teilnehmerstationen des Bussystems ausgehandelt wird, welche der Teilnehmerstationen in der nachfolgenden zweiten Kommunikationsphase zumindest zeitweise einen exklusiven, kollisionsfreien Zugriff auf den Bus des Bussystems hat, wie in den Ansprüchen genauer beschrieben.

Mindestens zwei Teilnehmerstationen können Teil eines Bussystems sein, das zudem einen Bus hat, so dass die mindestens zwei Teilnehmerstationen über den Bus derart miteinander verbunden sind, dass sie seriell miteinander kommunizieren können und von denen mindestens eine Teilnehmerstation eine zuvor beschriebene Teilnehmerstation ist.

Die zuvor genannte Aufgabe wird zudem durch ein Verfahren zur Kommunikation in einem seriellen Bussystem nach Anspruch 15 gelöst. Das Verfahren wird von einer Sende-/Empfangseinrichtung für eine Teilnehmerstation des seriellen Bussystems ausgeführt, die einen Empfänger, einen Auswerteblock, und einen ersten Anschluss aufweist, wobei das Verfahren die Schritte aufweist: seriell Empfangen, mit dem Empfänger, einer Nachricht von einem Bus des Bussystems, Auswerten, mit dem Auswerteblock, ob die empfangene Nachricht für die Teilnehmerstation bestimmt ist und somit entweder Daten der empfangenen Nachricht von der Teilnehmerstation zu empfangen sind oder von der Sende-/Empfangseinrichtung in die empfangene Nachricht Daten der Teilnehmerstation einzufügen und auf den Bus zu senden sind, und seriell Ausgeben, mit dem ersten Anschluss, eines Signals für die Teilnehmerstation auf der Grundlage der Auswertung des Auswerteblocks, wobei der Auswerteblock an dem ersten Anschluss immer eine Signalflanke ausgibt, wenn die empfangene Nachricht für die Teilnehmerstation bestimmt ist und in den Daten der empfangenen Nachricht derzeit ein Daten-Bit ansteht oder von der Sende-/Empfangseinrichtung in die empfangene Nachricht ein Daten-Bit der Daten einzufügen ist, wie in Anspruch 15 beschrieben.

Das Verfahren bietet dieselben Vorteile, wie sie zuvor in Bezug auf die Sende-/Empfangseinrichtung und/oder die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Blockschaltbild einer Teilnehmerstation mit einer Sende-/Empfangseinrichtung für das Bussystem gemäß dem ersten Ausführungsbeispiel;
Fig. 3 ein Blockschaltbild einer Teilnehmerstation mit einer Sende-/Empfangseinrichtung für das Bussystem gemäß einem zweiten Ausführungsbeispiel;
Fig. 4 ein Blockschaltbild einer Teilnehmerstation mit einer Sende-/Empfangseinrichtung für das Bussystem gemäß einem dritten Ausführungsbeispiel;
Fig. 5 ein Blockschaltbild einer Teilnehmerstation mit einer Sende-/Empfangseinrichtung für das Bussystem gemäß einem vierten Ausführungsbeispiel; und
Fig. 6 ein Blockschaltbild einer Teilnehmerstation mit einer Sende-/Empfangseinrichtung für das Bussystem gemäß einem fünften Ausführungsbeispiel.

In den Figuren sind gleiche oder funktionsgleiche Elemente, sofern nichts Anderes angegeben ist, mit denselben Bezugszeichen versehen.

### Beschreibung der Ausführungsbeispiele

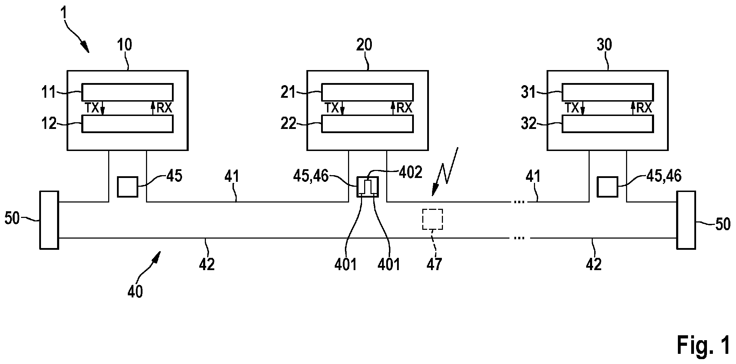

Fig. 1 zeigt als Beispiel ein Bussystem 1, das insbesondere grundlegend für ein Classical CAN-Bussystem, ein CAN FD-Bussystem oder CAN FD-Nachfolgebussysteme ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busleitung 41 und einer zweiten Busleitung 42 angeschlossen sind. Der Bus 40 ist an seinen Enden mit einer Reflexionsdämpfungsvorrichtung 50 abgeschlossen, die insbesondere als Widerstand ausgebildet ist.

Die Busleitungen 41, 42 können auch CAN_H und CAN_L genannt werden und dienen, unter Verwendung eines TX-Signals im Sendezustand, zur elektrischen Signalübertragung nach Einkopplung der dominanten Pegel bzw. Zustände 401 oder Erzeugung bzw. aktivem Treiben von rezessiven Pegeln bzw. Zuständen 402. Die Zustände 401, 402 sind nur bei der Teilnehmerstation 20 sehr schematisch gezeigt. Die Zustände 401, 402 entsprechen den Zuständen eines TX-Signals einer sendenden Teilnehmerstation 10, 20, 30. Nach Übertragung der Signale CAN_H und CAN_L auf den Busleitungen 41, 42 werden die Signale von den Teilnehmerstationen 10, 20, 30 als ein RX-Signal empfangen. Über den Bus 40 sind Nachrichten 45, 46 in der Form der Signale CAN_H und CAN_L zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, wird in der Regel ein Fehlerrahmen 47 (Error Flag) gesendet. Die Teilnehmerstationen 10, 20, 30 sind beispielsweise Steuergeräte, Sensoren, Anzeigevorrichtungen, usw. eines Kraftfahrzeugs.

Aus den Signalen CAN_H und CAN_L auf den beiden Busleitungen 41, 42 errechnet sich eine differentielle Busspannung VDIFF = CAN_H - CAN_L. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationsschnittstelle 11 und eine Sende-/Empfangseinrichtung 12. Die Teilnehmerstation 20 hat eine Kommunikationssteuereinrichtung 21 und eine Sende-/Empfangseinrichtung 22. Die Teilnehmerstation 30 hat eine Kommunikationssteuereinrichtung 31 und eine Sende-/Empfangseinrichtung 32. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationsschnittstelle 11 der Teilnehmerstation 10 für die Sende-/Empfangseinrichtung 12 wird nachfolgend noch genauer beschrieben.

Die Kommunikationssteuereinrichtungen 21, 31 dienen jeweils zur Steuerung einer Kommunikation der jeweiligen Teilnehmerstation 20, 30 über den Bus 40 mit einer oder mehreren anderen Teilnehmerstation(en) der Teilnehmerstationen 10, 20, 30, die an den Bus 40 angeschlossen sind. Hierbei erzeugen die Kommunikationssteuereinrichtungen 21, 31 jeweils ein Sendesignal, das auch TX-Signal genannt wird, für die zu sendende Nachrichten 45, 46 und senden das TX-Signal an die zugehörige Sende-/Empfangseinrichtung 22, 32. Zudem kann die jeweilige Kommunikationssteuereinrichtung 21, 31 ein Empfangssignal, das auch RX-Signal genannt wird, für die vom Bus 40 empfangene Nachricht 45, 46 von der zugehörigen Sende-/Empfangseinrichtung 12, 22, 32 empfangen und auswerten. Insbesondere können die Kommunikationssteuereinrichtungen 21, 31 die Nachrichten 45, 46 derart erzeugen, dass in einer ersten Kommunikationsphase zum Senden der Nachrichten 45, 46 auf den Bus 40 zwischen den Teilnehmerstationen 10, 20, 30 ausgehandelt wird, welche der Teilnehmerstationen 10, 20, 30 in einer nachfolgenden zweiten Kommunikationsphase zumindest zeitweise einen exklusiven, kollisionsfreien Zugriff auf den Bus 40 des Bussystems 1 hat. In der zweiten Kommunikationsphase können die Nutzdaten der Nachrichten 45, 46 auf den Bus 40 gesendet werden.

Die Kommunikationssteuereinrichtungen 21, 31 können wie ein herkömmlicher Classical CAN- oder CAN FD-Controller ausgeführt sein. Die Kommunikationssteuereinrichtungen 21, 31 erstellen und lesen erste Nachrichten 45, die beispielsweise Classical CAN-Nachrichten oder CAN FD Nachrichten sind. Die Classical CAN-Nachrichten sind gemäß dem Classical Basisformat aufgebaut, bei welchem in der ersten Nachricht 45 eine Anzahl von bis zu 8 Datenbytes umfasst sein können. Die CAN FD Nachricht ist gemäß dem CAN FD Format aufgebaut, bei welcher eine Anzahl von bis zu 64 Datenbytes umfasst sein können, die noch dazu mit einer deutlich schnelleren und damit höheren Datenrate als bei der Classical CAN-Nachricht übertragen werden. Die Sende-/Empfangseinrichtungen 22, 32 können wie ein herkömmlicher CAN Transceiver und/oder CAN FD Transceiver ausgeführt sein.

Jede der Kommunikationssteuereinrichtungen 21, 31 erstellt und liest erste Nachrichten 45, wie zuvor beschrieben, oder optional zweite Nachrichten 46. Die zweiten Nachrichten 46 sind auf der Grundlage eines Formats aufgebaut, das als CAN FD-Nachfolgeformat bezeichnet wird und beispielsweise Daten in der Datenphase mit einer höheren Bitrate als CAN FD übertragen kann. Jede der Sende-/Empfangseinrichtungen 22, 32 kann als CAN Transceiver ausgeführt sein, der je nach Bedarf eine der zuvor beschriebenen ersten Nachrichten 45 oder eine zweite Nachricht 46 gemäß dem CAN FD-Nachfolgeformat für die zugehörige Kommunikationssteuereinrichtung 21, 31 bereitstellen oder von dieser empfangen kann.

Mit den beiden Teilnehmerstationen 20, 30 ist eine Bildung und dann Übertragung von Nachrichten 46 mit dem CAN FD-Nachfolgeformat sowie der Empfang solcher Nachrichten 46 realisierbar.

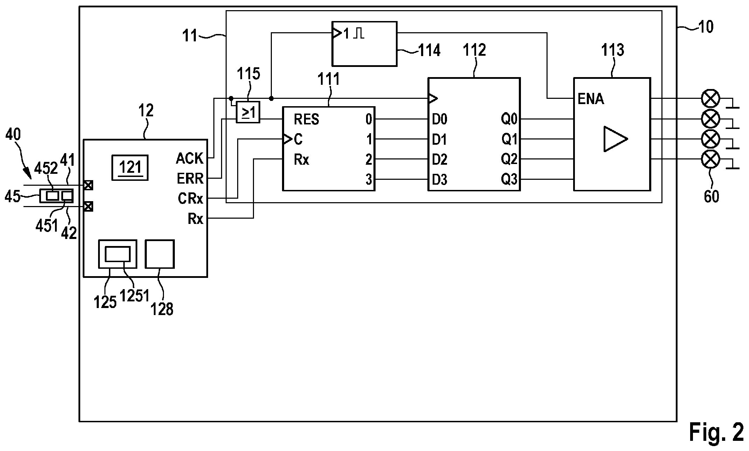

Fig. 2 zeigt die Teilnehmerstation 10 mit der Kommunikationsschnittstelle 11 und der Sende-/Empfangseinrichtung 12 für die Busleitungen 41, 42 des Busses 40 gemäß dem vorliegenden Ausführungsbeispiel genauer.

Die Kommunikationsschnittstelle 11 ist zwischen die Sende-/Empfangseinrichtung 12 und mindestens eine elektrische Last oder Verbraucher 60 geschaltet. Bei dem speziellen Beispiel von Fig. 2 sind vier Verbraucher 60 vorhanden. Es sind jedoch beliebig viele Verbraucher 60 anschließbar. Die Kommunikationsschnittstelle 11 ist für eine vorbestimmte Anzahl von Verbrauchern 60, insbesondere 1, 4, 8, usw. oder eine sonstige beliebige Anzahl ausgestaltet.

Die Kommunikationsschnittstelle 11 hat einen Deserializer 111, eine Anschalt-Schaltung 112, eine Endstufe 113, eine Deaktivierungs-Schaltung 114 und eine Rücksetz-Schaltung 115. Die Endstufe 113 muss jedoch nicht Teil der Kommunikationsschnittstelle 11 sein, sondern kann alternativ extern von der Kommunikationsschnittstelle 11 vorgesehen sein.

Die Sende-/Empfangseinrichtung 12 hat einen Empfänger 121, einen Speicherblock 125 zum Speichern mindestens eines Teilnehmerstation-Identifizierers (ID) 1251 und einen Auswerteblock 128. Zudem hat die Sende-/Empfangseinrichtung 12 zusätzlich zu einem Anschluss Rx für das Empfangssignal RX einen Anschluss CRx. Noch dazu sind Anschlüsse ACK, ERR vorgesehen, mit welchen die Kommunikationsschnittstelle 11 den Erfolg oder Misserfolg des Empfangs einer Nachricht 45 anzeigen kann.

Im Betrieb des Bussystems 1 empfängt die Sende-/Empfangseinrichtung 12 mit dem Empfänger 121 eine Nachricht 45 als ein Signal von dem Bus 40. Der Empfänger 121 wandelt das Signal von dem Bus 40, das bei CAN die Spannung VDIFF ist, in das digitale Empfangssignal RX und gibt das Empfangssignal RX an seinem Anschluss Rx aus. Zudem prüft die Sende-/Empfangseinrichtung 12 mit dem Auswerteblock 128 im Betrieb einen Identifizierer 451 einer derzeit empfangenen Nachricht 45. Der Identifizierer 451 wird in der ersten Kommunikationsphase übertragen und gibt die Priorität und damit Wichtigkeit der Nachricht 45 an, mit welcher die Nachricht 45 über den Bus 40 zu senden ist.

Beim Prüfen und damit Auswerten des Identifizierers 451 vergleicht die Sende-/Empfangseinrichtung 12, genauer gesagt ihr Auswerteblock 128, den Identifizierer 451 der derzeit empfangenen Nachricht 45 mit dem intern gespeicherten mindestens einen Teilnehmerstation-Identifizierer 1251. Stimmen die Identifizierer 451, 1251 überein, dann ist die Nachricht 45 für die Teilnehmerstation 10 bestimmt. In diesem Fall erzeugt die Sende-/Empfangseinrichtung 12, genauer gesagt ihr Auswerteblock 128, an dem Anschluss CRx ein Signal CRX. Hierfür gibt die Sende-/Empfangseinrichtung 12, genauer gesagt ihr Auswerteblock 128, an dem Anschluss CRx immer dann eine Signalflanke aus, wenn im Datenfeld 452 der Nachricht 45, das in der zweiten Kommunikationsphase übertragen wird, ein neues Daten-Bit zum Auslesen an dem Anschluss Rx für das Empfangssignal RX bereit ist. Liegt dagegen der Pegel eines Stuff-Bits an dem Anschluss Rx an, dann gibt die Sende-/Empfangseinrichtung 12, genauer gesagt ihr Auswerteblock 128, an dem Anschluss CRx keine Signalflanke für das Signal CRX aus.

Somit ist der Auswerteblock 128 zur Auswertung ausgestaltet, ob die empfangene Nachricht 45 für die Teilnehmerstation10 bestimmt ist und somit Daten 452 der empfangenen Nachricht 45 von der Teilnehmerstation 10 zu empfangen sind. Außerdem ist der Auswerteblock 128 ausgestaltet, an dem ersten Anschluss CRx immer eine Signalflanke auszugeben, wenn die empfangene Nachricht 45 für die Teilnehmerstation 10 bestimmt ist und in den Daten 452 der empfangenen Nachricht 45 derzeit ein Daten-Bit ansteht.

Stuff-Bits werden entweder dynamisch in die Nachricht 45 eingefügt, insbesondere nach einer vorbestimmten Anzahl von gleichen Bits wird ein Bit mit inversem Zustand eingefügt, oder nach einer festen Stuffing-Regel, insbesondere nach einer vorbestimmten Anzahl von gleichen Bits wird ein Bit mit vorbestimmtem Zustand eingefügt.

Der Deserializer 111 ist an die Anschlüsse CRx, Rx der Sende-/Empfangseinrichtung 12 angeschlossen. Der Deserializer 111 wandelt die seriell von den Anschlüssen CRx, Rx empfangenen digitalen Signale CRX, RX in ein paralleles Signal mit Bits 0 bis 3 und leitet die empfangenen Bits 0 bis 3 zum Zwischenspeichern an die Anschalt-Schaltung 112 weiter.

Die Anschalt-Schaltung 112 hat die Eingänge D0, D1, D2, D3 und die Ausgänge Q0, O1, Q2, Q3. Hierbei ist dem Eingang D0 der Ausgang Q0 zugeordnet. Der Eingang D1 ist dem Ausgang Q1 zugeordnet. Der Eingang D2 ist dem Ausgang Q2 zugeordnet. Der Eingang D3 ist dem Ausgang Q3 zugeordnet. Die Anschalt-Schaltung 112 hat bei dem Beispiel von Fig. 2 vier D-Flipflops, jedoch mindestens ein D-Flipflop. An jedem der Ausgänge Q0, Q1, Q2, Q3 ist ein Verbraucher anschließbar. Bei dem speziellen Beispiel von Fig. 1 ist an jedem der Ausgänge Q0, Q1, Q2, Q3 ein Verbraucher 60 angeschlossen.

Wurde die Nachricht 45 vollständig und fehlerfrei empfangen, sendet die Sende-/Empfangseinrichtung 12 das ACK-Bit gemäß dem bei CAN bekannten Verfahren auf den Bus 40. Zudem, insbesondere gleichzeitig, ändert die Sende-/Empfangseinrichtung 12 den Pegel am Anschluss ACK. Dadurch werden die Speicher der D-FlipFlops der Schaltung 112 mit den anliegenden Werten des Deserializers 111 überschrieben und über die Endstufen 113 die daran angeschlossenen Verbraucher 60 angesteuert.

Somit kann mit jedem Bit der CAN-Nachricht 45 ein Verbraucher 60 direkt ein- oder ausgeschaltet werden.

Wurde für eine vorbestimmte Zeit keine Nachricht 45 fehlerfrei empfangen, deren Identifizierer 451 mit dem mindestens einen Identifizierer 1251 übereingestimmt hat, dann werden die Endstufen 113 über deren Eingang ENA durch die Deaktivierungs-Schaltung 114 deaktiviert. Die Deaktivierungs-Schaltung 114 ist bei dem vorliegenden Beispiel von Fig. 2 als Monoflop ausgestaltet.

Tritt ein Fehler innerhalb der Nachricht 45 auf und wurde das ACK-Bit vollständig übertragen bzw. der Pegel am Anschluss ACK entsprechend geändert, wie zuvor beschrieben, wird der Deserializer 111 über einen Anschluss RES mit Hilfe der Rücksetz-Schaltung 115 auf einen Ausgangswert zurückgesetzt.

Auf diese Weise steuert die Sende-/Empfangseinrichtung 12 die Verbraucher 60 mit der Kommunikationsschnittstelle 11 und der Endstufe 113 direkt an. Die Endstufe 113 kann als mindestens ein spezieller Endstufenbaustein ausgestaltet sein.

Daher ist bei der Teilnehmerstation 10 ein Mikrocontroller zum Ansteuern der Endstufen 113 und zur Kommunikation mit der Sende-/Empfangseinrichtung 12 nicht notwendig, wie dies bei den Teilnehmerstationen 20, 30, nämlich mit beispielsweise den Kommunikationssteuereinrichtungen 21, 31, erforderlich ist.

Die zuvor beschriebene Teilnehmerstation 10 mit deren Sende-/Empfangseinrichtung 12 und Kommunikationsschnittstelle 11 kann in allen CAN-Netzwerken, insbesondere dem Bussystem 1, eingesetzt werden. Dadurch wird der Einsatz eines CAN-Netzwerks, insbesondere das Bussystem 1, in modernen E/E-Architekturen ermöglicht und vereinfacht.

Mit der zuvor beschriebenen Teilnehmerstation 10 mit deren Sende-/Empfangseinrichtung 12 und Kommunikationsschnittstelle 11 ist es beispielsweise möglich, Lichter eines Fahrzeugs per CAN-Bussystem 1 ein- oder auszuschalten, einen Motor einer Drosselklappe per CAN-Bussystem 1 anzusteuern, Scheibenwischermotoren per CAN- Bussystem 1 anzusteuern, über einen einzigen CAN-Bus 40 alle Fensterhebermotoren anzusteuern.

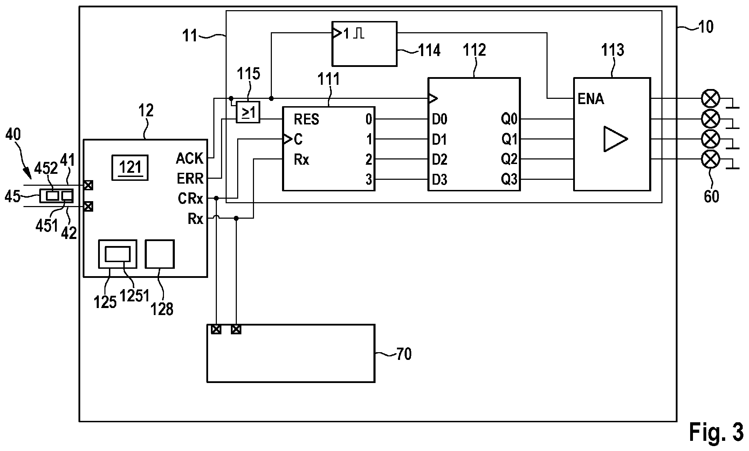

Fig. 3 zeigt die Teilnehmerstation 10 mit der Kommunikationsschnittstelle 11 und der Sende-/Empfangseinrichtung 12 gemäß einem zweiten Ausführungsbeispiel genauer.

Die Kommunikationsschnittstelle 11 ist im Unterschied zu der Teilnehmerstation 10 gemäß dem vorangehenden Ausführungsbeispiel zusätzlich mit einem Digital/Analog-Wandler 70 verbunden. Hierfür ist der Wandler 70 an die Anschlüsse CRx und Rx der Kommunikationsschnittstelle 11 angeschlossen. Der Digital/Analog-Wandler 70 kann alternativ ein externer Digital/Analog-Wandler 70 sein, der extern von der Teilnehmerstation 10 angeordnet ist. Der Digital/AnalogWandler 70 kann alternativ Teil der Kommunikationsschnittstelle 11 sein.

Mit dem Digital/Analog-Wandler 70 sind die PWM-Tastverhältnisse (PWM = Pulsweitenmodulation) oder die Spannungen der Endstufe 113 steuerbar.

Somit können mit den Bits der CAN Nachricht 45 die Leistungen der Verbraucher 60 gesteuert werden.

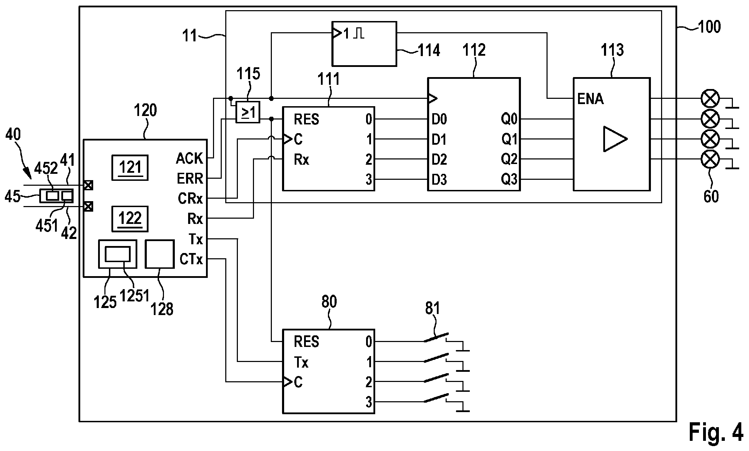

Fig. 4 zeigt eine Teilnehmerstation 100 mit der Kommunikationsschnittstelle 11 und einer Sende-/Empfangseinrichtung 120 gemäß einem dritten Ausführungsbeispiel genauer.

Die Sende-/Empfangseinrichtung 120 gemäß dem vorliegenden Ausführungsbeispiel hat zusätzlich einen Anschluss CTx sowie einen Anschluss Tx für das Sendesignal TX von Fig. 1. Zudem hat die Sende-/Empfangseinrichtung 120 von Fig. 4 einen Sender 122 zum Senden des Sendesignals TX als Nachricht 45 auf den Bus 40.

An den Anschlüssen CTx, Tx der Sende-/Empfangseinrichtung 120 ist ein Serialiser 80 angeschlossen, an den mindestens ein Schalter 81 für einen Sensor angeschlossen ist. Die Sensorwerte stehen als Bits 0 bis 3 an dem Serialiser 80 an. Der Serialiser 80 reiht die Bits 0 bis 3 als Sendesignal TX nacheinander an und gibt dieses an seinem Anschluss Tx seriell aus. An einem Anschluss RES ist der Serializer 80 mit Hilfe der Rücksetz-Schaltung 115 auf einen Ausgangswert zurücksetzbar.

Im Betrieb des Bussystems 1 prüft die Sende-/Empfangseinrichtung 120 anhand der Bits im Arbitrierungs- und Control-Feld der Nachricht 45, ob die Sende-/Empfangseinrichtung 120 Sensorwerte des mindestens einen Sensors 81, nämlich mindestens eines der Bits 0 bis 3, in die empfangene Nachricht 45 einfügen und damit senden soll. Ist das der Fall, dann gibt die Sende-/Empfangseinrichtung 120 an dem Anschluss CTx immer dann eine Flanke aus, wenn die Sende-/Empfangseinrichtung 120 den Pegel an dem Anschluss Tx als Daten-Bit der Sensornachricht, nämlich als Signal TX, gesendet hat.

Somit ist der Auswerteblock 128 zur Auswertung ausgestaltet, ob die empfangene Nachricht 45 für die Teilnehmerstation10 bestimmt ist und somit von der Sende-/Empfangseinrichtung 120 in die empfangene Nachricht 45 Daten 452 der Teilnehmerstation 100 einzufügen und auf den Bus 40 zu senden sind. Außerdem ist der Auswerteblock 128 ausgestaltet, an dem Anschluss CTx immer eine Signalflanke auszugeben, wenn die empfangene Nachricht 45 für die Teilnehmerstation 10 bestimmt ist und von der Sende-/Empfangseinrichtung 120 in die empfangene Nachricht 45 ein Daten-Bit der Daten 452 einzufügen ist.

Somit kann die Sende-/Empfangseinrichtung 120 Sensorwerte mit dem Serialiser 80 als speziellen Sensorbaustein direkt auslesen und mit einer Nachricht 45 versenden.

Im Anschluss an die Datenübertragung ergänzt die Sende-/Empfangseinrichtung 120 die Checksummenbits. Die Sende-/Empfangseinrichtung 120 prüft die Nachricht 45 auf Bitstuffing- und Checksummenfehler. Nur wenn keine Fehler erkannt wurden, quittiert die Sende-/Empfangseinrichtung 120 den Empfang durch Setzen des ACK-Bits und erzeugt eine Flanke an seinem ACK-Anschluss, um damit den anderen Bauteilen 80, 111, 112, 114 den vollständigen und fehlerfreien Empfang mitzuteilen. Wie üblich überprüfen andere Teilnehmerstationen des Bussystems 1, mindestens der Sender, der die Nachricht 45 mit dem Identifizierer 451 gesendet hat, beispielsweise die Teilnehmerstation 20, ob z.B. Stuff-Bits bei der Datenübertragung fehlen oder die Checksumme falsch ist. Im Fehlerfall senden die anderen Teilnehmerstationen des Bussystems 1, insbesondere der Sender, der die Nachricht 45 mit dem Identifizierer 451 gesendet hat, einen Fehlerrahmen 47, wie in Fig. 1 gezeigt.

Daher ist bei der Teilnehmerstation 100 von Fig. 4 ein Mikrocontroller zum Auslesen der Sensordaten, Ansteuern der Endstufen 113 und zur Kommunikation mit der Sende-/Empfangseinrichtung 120 nicht notwendig, wie dies bei den Teilnehmerstationen 20, 30, nämlich mit beispielsweise den Kommunikationssteuereinrichtungen 21, 31, erforderlich ist.

Die zuvor beschriebene Teilnehmerstation 100 mit deren Sende-/Empfangseinrichtung 120 und Kommunikationsschnittstelle 11 kann in allen CAN-Netzwerken, insbesondere dem Bussystem 1, eingesetzt werden. Dadurch wird der Einsatz eines CAN-Netzwerks, insbesondere das Bussystem 1, in modernen E/E-Architekturen ermöglicht und vereinfacht.

Mit der zuvor beschriebenen Teilnehmerstation 100 mit deren Sende-/Empfangseinrichtung 120 und Kommunikationsschnittstelle 11 ist es beispielsweise möglich, die Bedienhebel für Licht, Blinker, Scheibenwischer, etc. per CAN-Bussystem 1 einzulesen, Lichter eines Fahrzeugs per CAN-Bussystem 1 ein- oder auszuschalten, einen Motor einer Drosselklappe per CAN-Bussystem 1 anzusteuern und auch deren Lagesensoren auszulesen, Scheibenwischermotoren per CAN- Bussystem 1 anzusteuern, über einen einzigen CAN-Bus 40 alle Fensterheberschalter auszulesen und alle Fensterhebermotoren anzusteuern.

Gemäß einer Modifikation der Teilnehmerstation 100 hat die Kommunikationsschnittstelle 11 den Serializer 80 und keinen Deserializer 111, keine Anschalt-Schaltung 112 und keine Endstufe 113. In diesem Fall kann die Teilnehmerstation 100 bzw. deren Kommunikationsschnittstelle 11 nur Sensorwerte versenden aber keine Verbraucher 60 ansteuern, wie zuvor in Bezug auf Fig. 2 beschrieben.

Gemäß einer Modifikation der Teilnehmerstation 100 hat die Sende-/Empfangseinrichtung 120 gemäß dem vorliegenden Ausführungsbeispiel nur einen Anschluss CRx/CTx, an welchem abhängig von der Auswertung des Auswerteblocks 128 entweder das Signal ausgegeben wird, das zuvor im Zusammenhang mit Fig. 2 und Fig. 3 in Bezug auf den Anschluss CRx beschrieben wurde, oder das Signal ausgegeben wird, das zuvor im Zusammenhang mit Fig. 4 in Bezug auf den Anschluss CTx beschrieben wurde.

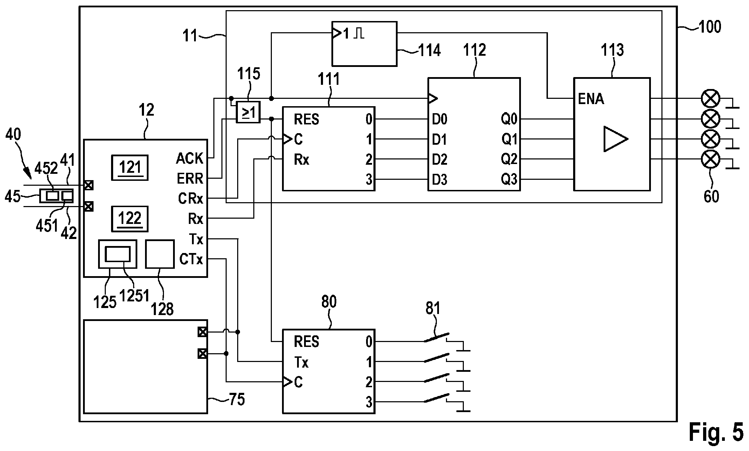

Fig. 5 zeigt die Teilnehmerstation 100 mit der Kommunikationsschnittstelle 11 und der Sende-/Empfangseinrichtung 120 gemäß einem vierten Ausführungsbeispiel genauer.

Die Sende-/Empfangseinrichtung 120 ist im Unterschied zu der Teilnehmerstation 100 gemäß dem vorangehenden Ausführungsbeispiel zusätzlich mit einem Analog/Digital-Wandler 75 verbunden. Hierfür ist der Wandler 75 an die Anschlüsse CTx und Tx der Sende-/Empfangseinrichtung 120 angeschlossen. Der Analog/Digital-Wandler 75 kann alternativ ein externer Analog/Digital-Wandler 75 sein, der extern von der Teilnehmerstation 100 angeordnet ist. Der Analog/Digital-Wandler 75 kann alternativ Teil der Kommunikationsschnittstelle 11 sein.

Mit dem Analog/Digital-Wandler 75 sind auch analoge Sensorwerte mit der Sende-/Empfangseinrichtung 120 sendbar bzw. übertragbar.

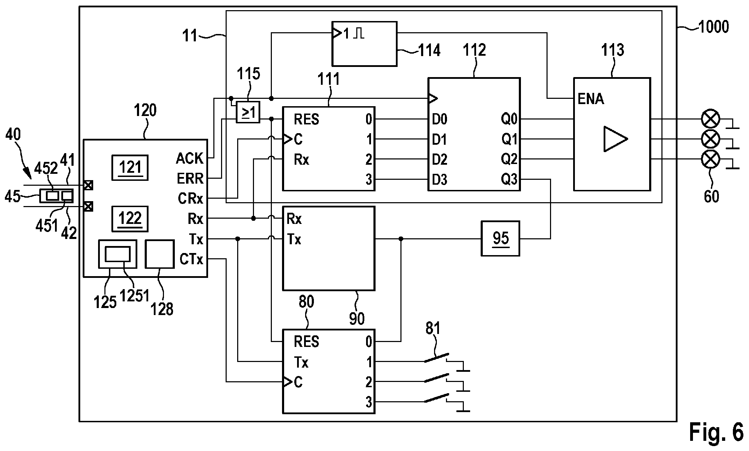

Fig. 6 zeigt eine Teilnehmerstation 1000 mit der Kommunikationsschnittstelle 11 und der Sende-/Empfangseinrichtung 120 gemäß einem fünften Ausführungsbeispiel genauer.

Hier ist an die Anschlüsse Rx und Tx der Sende-/Empfangseinrichtung 120 ein Controller 90 angeschlossen, welcher die Funktionen hat, wie die Kommunikationssteuereinrichtungen 21, 31 für die Teilnehmerstationen 20, 30. Zudem ist eine Aufweckschaltung (Wake-Up-Schaltung) 95 an den Controller 90 und einen Ausgang der Anschalt-Schaltung 112, genauer gesagt an den Ausgang Q3, angeschlossen.

Die Sende-/Empfangseinrichtung 120 ist somit eine Wake-Up-fähige CAN-Sende-/Empfangseinrichtung 120, welche den Identifizierer 451 der Nachricht 45 auswertet wie zuvor beschrieben. Stimmt der Identifizierer 451 mit dem gespeicherten Identifizierer 1251 überein, dann aktiviert die Sende-/Empfangseinrichtung 120 mit Hilfe der Kommunikationsschnittstelle 11 den Ausgang Q3 der Anschalt-Schaltung 112. Dadurch wird über die Aufweckschaltung 95 die Spannungsversorgung für den Controller 90 eingeschaltet. In Folge dessen wird der Controller 90 eingeschaltet.

Sobald der Controller 90 eingeschaltet ist, kann er mit dem Auslesen bzw. Ansteuern der Anschlüsse Rx, Tx der Sende-/Empfangseinrichtung 120 über den Bus 40 kommunizieren.

In diesem Fall können mit dem Serializer 80 und/oder Deserializer 111 sowie dem optional vorhandenen Digital/Analog-Wandler 70 und/oder Analog/DigitalWandler 75 auch Zustandsgrößen des Controllers 90 mit dem Bussystem 1 gemessen und beeinflusst werden.

Beispielsweise kann, wie in Fig. 6 gezeigt, mit dem Ausgang Q3 der Anschalt-Schaltung 112 die Spannung des Controllers 90 ein- oder ausgeschaltet werden. Alternativ oder zusätzlich kann die Spannung des Controllers 90 und/oder dessen Taktfrequenz unabhängig vom Controller 90 über einen zweiten Kanal gemessen werden. Das ist von Vorteil, wenn den Ausgabewerten des Controllers 90 aufgrund von zu niedriger Spannung oder falscher Taktfrequenz nicht vertraut werden kann.

Endstufen 113, die der Controller 90 normalerweise ansteuern würde, können durch die Sende-/Empfangseinrichtung 120 angesteuert werden, während der Controller 90 inaktiv ist. Ebenso können Sensorwerte, die der Controller 90 normalerweise erfasst und per Bus 40 versendet, während der Inaktivität des Controllers 90 versendet werden.

Auf diese Weise können die Funktionen des Controllers 90 sehr effektiv unter Minimierung des Energieverbrauchs im Betrieb des Bussystems 1 genutzt werden.

Alle zuvor beschriebenen Ausgestaltungen der Teilnehmerstationen 10, 20, 30, 100, 1000, der Sende-/Empfangseinrichtungen 12, 22, 32, 120 des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Denkbar ist, dass zumindest eine der Sende-/Empfangseinrichtungen 12, 120 ebenfalls Nachrichten 46 senden und empfangen kann.

Alternativ können von den getrennt dargestellten Bauteilen, insbesondere Sende-/Empfangseinrichtungen 12, 120 und/oder Wandler 70, 75 und/oder Serializer 80 und/oder Deserializer 111, zumindest zwei Bauteile gemeinsam in einem ASIC bzw. einem Stück Silizium integriert sein.

Alternativ kann die Sende-/Empfangseinrichtung 12, 120 eine SPI-Schnittstelle während der Produktion als Slave, also untergeordnete Einheit, verwenden, um den mindestens einen Identifizierer 1251 einzuprogrammieren aber während des regulären Betriebs die SPI-Schnittstelle als Master, also übergeordnete Einheit, nutzen, um damit die empfangenen Daten der Nachrichten 45 nach erfolgreicher Prüfung der Prüfsumme (erfolgreichem CRC-Check) an daran angeschlossene Endstufenbausteine 113 zu versenden.

Alternativ kann die Sende-/Empfangseinrichtung 12, 120 die neuen Anschlüsse ACK, ERR, CRx und CTx mit den Anschlüssen der SPI-Schnittstelle durch Mehrfachnutzung zusammenlegen, Dies gilt vor allem dann, wenn die SPI-Schnittstelle nur während der Produktion zur Konfiguration mit dem mindestens einen Identifizierer 1251 verwendet wird.

Alternativ kann insbesondere zur Ansteuerung von Verbrauchern 60 oder zum Auslesen von Sensoren mittels der Schalter 81 die CAN-Kommunikation eindrahtig und gegebenenfalls per LIN-Protokoll erfolgen. Dadurch kann ein Anschluss an der Teilnehmerstation 10, 100, 1000 gespart werden.

Die Sensorwerte und Aktorwerte können entweder mit zwei unterschiedlichen Nachrichten 45 und Identifizierer 451 übertragen werden oder innerhalb einer einzigen Nachricht 45 übertragen werden.

Auch wenn die Teilnehmerstationen 10, 20, 30, 100 in Bezug auf das CAN-Bussystem beschrieben sind, ist die Erfindung nicht darauf beschränkt. Die Teilnehmerstationen 10, 20, 30, 100 der Ausführungsbeispiele und deren Modifikationen sind in allen verzweigten Bussystemen, also nicht nur bei CAN- und CAN-FD-Netzwerken oder deren Nachfolge-Netzwerken einsetzbar. In gleicher Weise sind die beschriebenen Schaltungen für verzweigte Bussysteme ohne differenzielle Signalübertragung wie z.B. LIN (Local Interconnect Network = lokales Zwischenverbindungsnetzwerk), usw. einsetzbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30, 100 auf einen gemeinsamen Kanal gewährleistet ist.

Die Anzahl und Anordnung der Teilnehmerstationen 10, 20, 30, 100 in dem Bussystem 1 der Ausführungsbeispiele ist beliebig. Insbesondere kann sowohl zumindest eine Teilnehmerstation 10 und zumindest eine Teilnehmerstation 100 in dem Bussystem 1 vorhanden sein. Es ist möglich, dass eine oder mehrere der Teilnehmerstationen 20 oder 30 in dem Bussystem 1 vorhanden sind.

## Patentansprüche

1. Sende-/Empfangseinrichtung (12; 120) für eine Teilnehmerstation (10; 100; 1000) eines seriellen Bussystems (1), mit
einem Empfänger (121) zum seriellen Empfang einer Nachricht (45) von einem Bus (40) des Bussystems (1),
einem Auswerteblock (128) zur Auswertung, ob die empfangene Nachricht (45) für die Teilnehmerstation (10; 100; 1000) bestimmt ist, und zur Auswertung, ob somit entweder Daten (452) der empfangenen Nachricht (45) von der Teilnehmerstation (10; 100; 1000) zu empfangen sind oder ob von der Sende-/Empfangseinrichtung (12; 120) in die empfangene Nachricht (45) Daten (452) einer Nachricht der Teilnehmerstation (10; 100; 1000) einzufügen und auf den Bus (40) zu senden sind, und
einem ersten Anschluss (CRx; CTx) zur seriellen Ausgabe eines Signals an eine Kommunikationsschnittstelle (10) der Teilnehmerstation (10; 100; 1000) für die Teilnehmerstation (10; 100; 1000) auf der Grundlage der Auswertung des Auswerteblocks (128),
wobei der Auswerteblock (128) ausgestaltet ist, an dem ersten Anschluss (CRx; CTx) immer eine Signalflanke des Signals auszugeben, wenn die Auswertung des Auswerteblocks (128) ergibt, dass die empfangene Nachricht (45) für die Teilnehmerstation (10; 100; 1000) bestimmt ist, und in den Daten (452) der empfangenen Nachricht (45) derzeit ein Daten-Bit ansteht oder von der Sende-/Empfangseinrichtung (12; 120) in die empfangene Nachricht (45) ein Daten-Bit der Daten (452) der Nachricht der Teilnehmerstation (10; 100; 1000) einzufügen ist.

2. Sende-/Empfangseinrichtung (12; 120) nach Anspruch 1, zudem mit einem zweiten Anschluss (Rx) zur seriellen Ausgabe an die Teilnehmerstation (10; 100; 1000) eines seriellen digitalen Empfangssignals (RX), das der Empfänger (121) aus der vom Bus (40) empfangenen Nachricht (45) erzeugt hat.

3. Sende-/Empfangseinrichtung (12; 120) nach Anspruch 1 oder 2, wobei der Auswerteblock (128) ausgestaltet ist, an dem ersten Anschluss (CRx) immer keine Signalflanke auszugeben, wenn in den Daten (452) der empfangenen Nachricht (45) derzeit ein Stuff-Bit ansteht.

4. Sende-/Empfangseinrichtung (12; 120) nach einem der vorangehenden Ansprüche,
zudem mit einem Speicherblock (125) zur Speicherung mindestens eines Teilnehmerstation-Identifizierers (1251), der eine Nachricht (45) spezifiziert, die für die Teilnehmerstation (10; 100; 1000) bestimmt ist,
wobei der Auswerteblock (128) zur Auswertung, ob die Nachricht (45) für die Teilnehmerstation (10; 100; 1000) bestimmt ist, einen Identifizierer der Nachricht (45) mit dem mindestens einen Teilnehmerstation-Identifizierer (1251) vergleicht.

5. Sende-/Empfangseinrichtung (12; 120) nach einem der vorangehenden Ansprüche, zudem mit
einem dritten Anschluss (ACK) zur Ausgabe an eine Kommunikationsschnittstelle (11) der Teilnehmerstation (10; 100; 1000) einer Signalflanke, die einen fehlerfreien Empfang der Nachricht (45) in der Sende-/Empfangseinrichtung (12; 120) bestätigt, und
einem vierten Anschluss (ERR) zur Ausgabe an die Kommunikationsschnittstelle (11) einer Signalflanke, die einen nicht fehlerfreien Empfang der Nachricht (45) in der Sende-/Empfangseinrichtung (12; 120) anzeigt.

6. Sende-/Empfangseinrichtung (12; 120) nach einem der vorangehenden Ansprüche, zudem mit
einem fünften Anschluss (Tx) zur Eingabe eines seriellen digitalen Sendesignals (TX) von der Teilnehmerstation (100; 1000),
einem Sender (122) zum seriellen Senden einer Nachricht (45) auf einen Bus (40) des Bussystems (1) auf der Grundlage des seriellen digitalen Sendesignals (TX) oder mit den in die empfangene Nachricht (45) eingefügten Daten (452) einer Nachricht der Teilnehmerstation (10; 100; 1000),
wobei der erste Anschluss (CTx) zur seriellen Ausgabe eines Signals an eine Kommunikationsschnittstelle (11) der Teilnehmerstation (10; 100; 1000) vorgesehen ist, um zu signalisieren, wenn die Sende-/Empfangseinrichtung 120 den Pegel an dem zweiten Anschluss (Tx) als Daten-Bit einer Nachricht der Teilnehmerstation (10; 100; 1000) gesendet hat.

7. Teilnehmerstation (10; 100; 1000) für ein serielles Bussystem (1), mit
einer Sende-/Empfangseinrichtung (12; 120) nach einem der vorangehenden Ansprüche, und
einer Kommunikationsschnittstelle (11), die an den ersten und zweiten Anschluss (Rx, CRx) angeschlossen ist.

8. Teilnehmerstation (10; 100; 1000) nach Anspruch 7, wobei die Kommunikationsschnittstelle (11) aufweist
einen Deserializer (111), der an den ersten und/oder zweiten Anschluss (Rx, CRx) der Sende-/Empfangseinrichtung (12; 120) angeschlossen ist und zum Deserialisieren des Empfangssignals (RX) auf der Grundlage des Signals von dem ersten Anschluss (CRx) ausgestaltet ist,
eine Anschalt-Schaltung (112) zum Einschalten oder Ausschalten mindestens einer Endstufe (113) für mindestens einen elektrischen Verbraucher (60) auf der Grundlage eines Daten-Bits des Empfangssignals (RX), das von dem Deserializer (111) an die Anschalt-Schaltung (112) ausgegeben wird.

9. Teilnehmerstation (10; 100; 1000) nach Anspruch 7 oder 8 bei Abhängigkeit von Anspruch 3, wobei die Kommunikationsschnittstelle (11) zudem aufweist
eine Deaktivierungs-Schaltung (114) zur Deaktivierung der mindestens einen Endstufe (113), wenn der Auswerteblock (128) für eine vorbestimmte Zeit keine Nachricht (45) als für die Teilnehmerstation (10) bestimmt auswertet, und
eine Rücksetz-Schaltung (115) zum Zurücksetzen des Deserializers (111), wenn an dem dritten Anschluss (ACK) ein Bit vollständig übertragen wurde, das einen fehlerfreien Empfang der Nachricht (45) bestätigt oder wenn an dem vierten Anschluss (ERR) ein Bit einen nicht fehlerfreien Empfang der Nachricht (45) anzeigt.

10. Teilnehmerstation (100; 1000) nach einem der Ansprüche 7 bis 9 bei Abhängigkeit von Anspruch 6,
zudem mit einem Serializer (80), der an den ersten und fünften Anschluss (CTx, Tx) der Sende-/Empfangseinrichtung (120) angeschlossen ist und zum Serialisieren von mindestens zwei Sensorwerten auf der Grundlage des Signals von dem ersten Anschluss (CTx) ausgestaltet ist, um die mindestens zwei Sensorwerte als Sendesignal (TX) seriell an den fünften Anschluss (Tx) der Sende-/Empfangseinrichtung (120) auszugeben,
wobei die mindestens zwei Sensorwerte analoge oder digitale Sensorwerte sind.

11. Teilnehmerstation (1000) nach einem der Ansprüche 7 bis 10,
zudem mit einem Controller (90) zum Erzeugen und Senden des Sendesignals (TX) für Nachrichten (45) an die Sende-/Empfangseinrichtung (12; 22; 32) und zum Empfangen und Auswerten von Nachrichten (45) von der Sende-/Empfangseinrichtung (12; 22; 32),
wobei der Controller (90) an die Kommunikationsschnittstelle (11) angeschlossen ist, so dass die Spannungsversorgung des Controllers (90) nur eingeschaltet wird, wenn die derzeit vom Bus (40) empfangene Nachricht (45) für die Teilnehmerstation (1000) bestimmt ist.

12. Teilnehmerstation (1000) nach Anspruch 11, wobei die Kommunikationsschnittstelle (11) an den Controller (90) angeschlossen ist, und wobei die Teilnehmerstation (1000) einen Serializer (80) und/oder Deserializer (111) sowie optional einen Digital/Analog-Wandler (70) und/oder Analog/Digital-Wandler (75) aufweist, der/die ausgestaltet ist/sind, mindestens eine Zustandsgröße des Controllers (90) zu erfassen und optional zu beeinflussen.

13. Teilnehmerstation (1000) nach Anspruch 11 oder 12, wobei der Controller (90) ausgestaltet ist, das Sendesignal (TX) derart zu erzeugen und/oder die Sende-/Empfangseinrichtung (12; 120) ausgestaltet ist, die Nachrichten (45; 46) derart zu erzeugen, dass eine erste Kommunikationsphase zum Senden der Nachrichten (45; 46) auf den Bus (40) und eine nachfolgende zweite Kommunikationsphase zum Senden der Nachrichten (45; 46) auf den Bus (40) vorhanden ist, wobei die erste Kommunikationsphase zum Aushandeln zwischen den Teilnehmerstationen (10; 20, 30) des Bussystems (1) vorgesehen ist, welche der Teilnehmerstationen (10; 20; 30) in der nachfolgenden zweiten Kommunikationsphase zumindest zeitweise einen exklusiven, kollisionsfreien Zugriff auf den Bus (40) des Bussystems (1) hat.

14. Bussystem (1), mit
einem Bus (40),
mindestens zwei Teilnehmerstationen (10; 20; 30; 100; 1000), welche über den Bus (40) derart miteinander verbunden sind, dass sie seriell miteinander kommunizieren können und von denen mindestens eine Teilnehmerstation eine Teilnehmerstation (10; 100; 1000) nach einem der Ansprüche 7 bis 13 ist.

15. Verfahren zur Kommunikation in einem seriellen Bussystem (1), wobei das Verfahren von einer Sende-/Empfangseinrichtung (12; 120) für eine Teilnehmerstation (10; 100; 1000) des seriellen Bussystems (1) ausgeführt wird, die einen Empfänger (121), einen Auswerteblock (128) und einen ersten Anschluss (CRx; CTx) aufweist, wobei das Verfahren die Schritte aufweist
seriell Empfangen, mit dem Empfänger (121), einer Nachricht (45) von einem Bus (40) des Bussystems (1),
Auswerten, mit dem Auswerteblock (128), ob die empfangene Nachricht (45) für die Teilnehmerstation (10; 100; 1000) bestimmt ist, und Auswerten, mit dem Auswerteblock (128), ob somit entweder Daten (452) der empfangenen Nachricht (45) von der Teilnehmerstation (10; 100; 1000) zu empfangen sind oder ob von der Sende-/Empfangseinrichtung (12; 120) in die empfangene Nachricht (45) Daten (452) einer Nachricht der Teilnehmerstation (10; 100; 1000) einzufügen und auf den Bus (40) zu senden sind, und
seriell Ausgeben, mit dem ersten Anschluss (CRx; CTx), eines Signals an eine Kommunikationsschnittstelle (10) der Teilnehmerstation (10; 100; 1000) für die Teilnehmerstation (10; 100; 1000) auf der Grundlage der Auswertung des Auswerteblocks (128),
wobei der Auswerteblock (128) an dem ersten Anschluss (CRx; CTx) immer eine Signalflanke des Signals ausgibt, wenn die Auswertung des Auswerteblocks (128) ergibt, dass die empfangene Nachricht (45) für die Teilnehmerstation (10; 100; 1000) bestimmt ist und in den Daten (452) der empfangenen Nachricht (45) derzeit ein Daten-Bit ansteht oder von der Sende-/Empfangseinrichtung (12; 120) in die empfangene Nachricht (45) ein Daten-Bit der Daten (452) der Nachricht der Teilnehmerstation (10; 100; 1000) einzufügen ist.

## Claims

1. Transmitting/receiving device (12; 120) for a subscriber station (10; 100; 1000) of a serial bus system (1), having
a receiver (121) for serially receiving a message (45) from a bus (40) of the bus system (1),
an evaluation block (128) for evaluating whether the received message (45) is intended for the subscriber station (10; 100; 1000) and for evaluating whether either data (452) in the received message (45) therefore need to be received by the subscriber station (10; 100; 1000) or whether data (452) in a message from the subscriber station (10; 100; 1000) need to be inserted into the received message (45) and transmitted onto the bus (40) by the transmitting/receiving device (12; 120), and
a first connection (CRx; CTx) for serially outputting a signal to a communication interface (10) of the subscriber station (10; 100; 1000) for the subscriber station (10; 100; 1000) on the basis of the evaluation by the evaluation block (128),
wherein the evaluation block (128) is configured to always output a signal edge of the signal at the first connection (CRx; CTx) if the evaluation by the evaluation block (128) reveals that the received message (45) is intended for the subscriber station (10; 100; 1000) and a data bit is currently present in the data (452) in the received message (45) or a data bit of the data (452) in the message from the subscriber station (10; 100; 1000) needs to be inserted into the received message (45) by the transmitting/receiving device (12; 120).

2. Transmitting/receiving device (12; 120) according to Claim 1, also having a second connection (Rx) for serially outputting, to the subscriber station (10; 100; 1000), a serial digital reception signal (RX) which was generated by the receiver (121) from the message (45) received from the bus (40).

3. Transmitting/receiving device (12; 120) according to Claim 1 or 2, wherein the evaluation block (128) is configured to always output no signal edge at the first connection (CRx) if a stuff bit is currently present in the data (452) in the received message (45).

4. Transmitting/receiving device (12; 120) according to one of the preceding claims,
also having a storage block (125) for storing at least one subscriber station identifier (1251) which specifies a message (45) which is intended for the subscriber station (10; 100; 1000),
wherein the evaluation block (128) for evaluating whether the message (45) is intended for the subscriber station (10; 100; 1000) compares an identifier of the message (45) with the at least one subscriber station identifier (1251).

5. Transmitting/receiving device (12; 120) according to one of the preceding claims, also having
a third connection (ACK) for outputting, to a communication interface (11) of the subscriber station (10; 100; 1000), a signal edge which confirms error-free reception of the message (45) in the transmitting/receiving device (12; 120), and
a fourth connection (ERR) for outputting, to the communication interface (11), a signal edge which indicates non-error-free reception of the message (45) in the transmitting/receiving device (12; 120).

6. Transmitting/receiving device (12; 120) according to one of the preceding claims, also having
a fifth connection (Tx) for inputting a serial digital transmission signal (TX) from the subscriber station (100; 1000),
a transmitter (122) for serially transmitting a message (45) onto a bus (40) of the bus system (1) on the basis of the serial digital transmission signal (TX) or with the data (452) in a message from the subscriber station (10; 100; 1000) which have been inserted into the received message (45),
wherein the first connection (CTx) is provided for the purpose of serially outputting a signal to a communication interface (11) of the subscriber station (10; 100; 1000) in order to signal if the transmitting/receiving device (120) has transmitted the level at the second connection (Tx) as a data bit in a message from the subscriber station (10; 100; 1000).

7. Subscriber station (10; 100; 1000) for a serial bus system (1), having
a transmitting/receiving device (12; 120) according to one of the preceding claims, and
a communication interface (11) which is connected to the first and second connections (Rx, CRx).

8. Subscriber station (10; 100; 1000) according to Claim 7, wherein the communication interface (11) has
a deserializer (111) which is connected to the first and/or second connection (Rx, CRx) of the transmitting/receiving device (12; 120) and is configured to deserialize the reception signal (RX) on the basis of the signal from the first connection (CRx),
a connection circuit (112) for switching at least one output stage (113) for at least one electrical load (60) on or off on the basis of a data bit of the reception signal (RX) which is output to the connection circuit (112) by the deserializer (111).

9. Subscriber station (10; 100; 1000) according to Claim 7 or 8 with dependence on Claim 3, wherein the communication interface (11) also has
a deactivation circuit (114) for deactivating the at least one output stage (113) if the evaluation block (128) does not evaluate any message (45) as being intended for the subscriber station (10) for a predetermined time, and
a reset circuit (115) for resetting the deserializer (111) if a bit confirming error-free reception of the message (45) was completely transmitted at the third connection (ACK) or if a bit indicates non-error-free reception of the message (45) at the fourth connection (ERR).

10. Subscriber station (100; 1000) according to one of Claims 7 to 9 with dependence on Claim 6,
also having a serializer (80) which is connected to the first and fifth connections (CTx, Tx) of the transmitting/receiving device (120) and is configured to serialize at least two sensor values on the basis of the signal from the first connection (CTx) in order to serially output the at least two sensor values, as a transmission signal (TX), to the fifth connection (Tx) of the transmitting/receiving device (120),
wherein the at least two sensor values are analogue or digital sensor values.

11. Subscriber station (1000) according to one of Claims 7 to 10,
also having a controller (90) for generating and transmitting the transmission signal (TX) for messages (45) to the transmitting/receiving device (12; 22; 32) and for receiving and evaluating messages (45) from the transmitting/receiving device (12; 22; 32),
wherein the controller (90) is connected to the communication interface (11), with the result that the voltage supply for the controller (90) is switched on only if the message (45) currently received from the bus (40) is intended for the subscriber station (100).

12. Subscriber station (1000) according to Claim 11, wherein the communication interface (11) is connected to the controller (90), and wherein the subscriber station (1000) has a serializer (80) and/or a deserializer (111) and optionally a digital/analogue converter (70) and/or analogue/digital converter (75) which is/are configured to capture and optionally influence at least one state variable of the controller (90).

13. Subscriber station (1000) according to Claim 11 or 12, wherein the controller (90) is configured to generate the transmission signal (TX), and/or the transmitting/receiving device (12; 120) is configured to generate the messages (45; 46), in such a manner that there is a first communication phase for transmitting the messages (45; 46) onto the bus (40) and a subsequent, second communication phase for transmitting the messages (45; 46) onto the bus (40), wherein the first communication phase is provided for the purpose of negotiating between the subscriber stations (10; 20, 30) of the bus system (1) which of the subscriber stations (10; 20; 30) at least temporarily has exclusive, collision-free access to the bus (40) of the bus system (1) in the subsequent, second communication phase.

14. Bus system (1) having
a bus (40),
at least two subscriber stations (10; 20; 30; 100; 1000) which are connected to one another via the bus (40) in such a manner that they can serially communicate with one another and at least one subscriber station of which is a subscriber station (10; 100; 1000) according to one of Claims 7 to 13.

15. Method for communicating in a serial bus system (1), wherein the method is carried out by a transmitting/receiving device (12; 120) for a subscriber station (10; 100; 1000) of the serial bus system (1) which has a receiver (121), an evaluation block (128) and a first connection (CRx; CTx), wherein the method has the steps of
using the receiver (121) to serially receive a message (45) from a bus (40) of the bus system (1),
using the evaluation block (128) to evaluate whether the received message (45) is intended for the subscriber station (10; 100; 1000), and using the evaluation block (128) to evaluate whether either data (452) in the received message (45) therefore need to be received by the subscriber station (10; 100; 1000) or whether data (452) in a message from the subscriber station (10; 100; 1000) need to be inserted into the received message (45) and transmitted onto the bus (40) by the transmitting/receiving device (12; 120), and
using the first connection (CRx; CTx) to serially output a signal to a communication interface (10) of the subscriber station (10; 100; 1000) for the subscriber station (10; 100; 1000) on the basis of the evaluation by the evaluation block (128),
wherein the evaluation block (128) always outputs a signal edge of the signal at the first connection (CRx; CTx) if the evaluation by the evaluation block (128) reveals that the received message (45) is intended for the subscriber station (10; 100; 1000) and a data bit is currently present in the data (452) in the received message (45) or a data bit of the data (452) in the message from the subscriber station (10; 100; 1000) needs to be inserted into the received message (45) by the transmitting/receiving device (12; 120).

## Revendications

1. Dispositif d'émission/réception (12 ; 120) pour un poste d'abonné (10 ; 100 ; 1000) d'un système de bus série (1), comprenant
un récepteur (121) pour la réception série d'un message (45) provenant d'un bus (40) du système de bus (1),
un bloc d'évaluation (128) pour évaluer si le message reçu (45) est destiné au poste d'abonné (10 ; 100 ; 1000), et pour évaluer si ainsi soit des données (452) du message reçu (45) sont à recevoir par le poste d'abonné (10 ; 100 ; 1000), soit si des données (452) d'un message du poste d'abonné (10 ; 100 ; 1000) sont à insérer par le dispositif d'émission/réception (12 ; 120) dans le message reçu (45) et à envoyer sur le bus (40), et
une première borne (CRx ; CTx) pour sortir en série un signal à destination d'une interface de communication (10) du poste d'abonné (10 ; 100 ; 1000) pour le poste d'abonné (10 ; 100 ; 1000) sur la base de l'évaluation du bloc d'évaluation (128),
dans lequel le bloc d'évaluation (128) est conçu pour sortir au niveau à la première borne (CRx ; CTx) toujours un flanc de signal du signal s'il résulte de l'évaluation du bloc d'évaluation (128) que le message reçu (45) est destiné au poste d'abonné (10 ; 100 ; 1000), et parmi les données (452) du message reçu (45) un bit de données est présent actuellement, ou que le dispositif d'émission/réception (12 ; 120) doit insérer dans le message reçu (45) un bit de données des données (452) du message du poste d'abonné (10 ; 100 ; 1000).

2. Dispositif d'émission/réception (12 ; 120) selon la revendication 1, comprenant en outre une deuxième borne (Rx) pour sortir en série à destination du poste d'abonné (10 ; 100 ; 1000) un signal de réception numérique série (RX) que le récepteur (121) a généré à partir du message reçu (45) du bus (40).

3. Dispositif d'émission/réception (12 ; 120) selon la revendication 1 ou 2, dans lequel le bloc d'évaluation (128) est conçu pour ne jamais sortir de flanc de signal au niveau de la première borne (CRx) si parmi les données (452) du message reçu (45) un bit de bourrage est présent actuellement.

4. Dispositif d'émission/réception (12 ; 120) selon l'une quelconque des revendications précédentes,
comprenant en outre un bloc de stockage (125) pour stocker au moins un identifiant de poste d'abonné (1251) qui spécifie un message (45) qui est destiné au poste d'abonné (10 ; 100 ; 1000),
dans lequel, pour évaluer si le message (45) est destiné au poste d'abonné (10 ; 100 ; 1000), le bloc d'évaluation (128) compare un identifiant du message (45) avec ledit au moins un identifiant de poste d'abonné (1251).

5. Dispositif d'émission/réception (12 ; 120) selon l'une quelconque des revendications précédentes, comprenant en outre
une troisième borne (ACK) pour sortir à destination d'une interface de communication (11) du poste d'abonné (10 ; 100 ; 1000) un flanc de signal qui confirme une réception sans erreur du message (45) dans le dispositif d'émission/réception (12 ; 120), et
une quatrième borne (ERR) pour sortir à destination de l'interface de communication (11) un flanc de signal qui indique une réception erronée du message (45) dans le dispositif d'émission/réception (12 ; 120).

6. Dispositif d'émission/réception (12 ; 120) selon l'une quelconque des revendications précédentes, comprenant en outre
une cinquième borne (Tx) pour entrer un signal d'émission numérique série (TX) provenant du poste d'abonné (100 ; 1000),
un émetteur (122) pour émettre en série un message (45) sur un bus (40) du système de bus (1) sur la base du signal d'émission numérique série (TX) ou avec les données (452) insérées dans le message reçu (45) d'un message du poste d'abonné (10 ; 100 ; 1000),
dans lequel la première borne (CTx) est prévue pour la sortie série d'un signal à une interface de communication (11) du poste d'abonné (10 ; 100 ; 1000) afin de signaliser si le dispositif d'émission/ réception (120) a émis le niveau à la deuxième borne (Tx) comme un bit de données d'un message du poste d'abonné (10 ; 100 ; 1000).

7. Poste d'abonné (10 ; 100 ; 1000) pour un système de bus série (1), comprenant
un dispositif d'émission/réception (12 ; 120) selon l'une quelconque des revendications précédentes, et
une interface de communication (11) qui est connectée à la première et à la deuxième borne (Rx, CRx) .

8. Poste d'abonné (10 ; 100 ; 1000) selon la revendication 7, dans lequel l'interface de communication (11) présente
un désérialiseur (111) qui est connecté à la première et/ou à la deuxième borne (Rx, CRx) du dispositif d'émission/réception (12 ; 120) et est conçu pour désérialiser le signal de réception (RX) sur la base du signal provenant de la première borne (CRx),
un circuit de mise sous tension (112) pour la mise sous ou hors tension d'au moins un étage final (113) pour au moins un consommateur électrique (60) sur la base d'un bit de données du signal de réception (RX) qui est sorti par le désérialiseur (111) à destination du circuit de mise sous tension (112).

9. Poste d'abonné (10 ; 100 ; 1000) selon la revendication 7 ou 8 lorsqu'elle dépend de la revendication 3, dans lequel l'interface de communication (11) présente en outre
un circuit de désactivation (114) pour désactiver ledit au moins un étage final (113) si le bloc d'évaluation (128) n'évalue aucun message (45) comme étant destiné au poste d'abonné (10) pendant un délai prédéterminé, et
un circuit de réinitialisation (115) pour réinitialiser le désérialiseur (111) si au niveau de la troisième borne (ACK) un bit a été transmis entièrement qui confirme une réception sans erreur du message (45), ou si au niveau de la quatrième borne (ERR) un bit indique une réception erronée du message (45).

10. Poste d'abonné (100 ; 1000) selon l'une quelconque des revendications 7 à 9 lorsqu'elle dépend de la revendication 6,
comprenant en outre un sérialiseur (80) qui est connecté à la première et à la cinquième borne (CTx, Tx) du dispositif d'émission/réception (120) et est conçu pour sérialiser au moins deux valeurs de capteur sur la base du signal provenant de la première borne (CTx) afin de sortir les au moins deux valeurs de capteur comme un signal d'émission (TX) en série à destination de la cinquième borne (Tx) du dispositif d'émission/réception (120),
dans lequel les au moins deux valeurs de capteur sont des valeurs de capteur analogiques ou numériques.

11. Poste d'abonné (1000) selon l'une quelconque des revendications 7 à 10,
comprenant en outre un contrôleur (90) pour générer et émettre le signal d'émission (TX) pour des messages (45) à destination du dispositif d'émission/ réception (12 ; 22 ; 32), et pour recevoir et évaluer des messages (45) provenant du dispositif d'émission/ réception (12 ; 22 ; 32),
dans lequel le contrôleur (90) est connecté à l'interface de communication (11) de sorte que l'alimentation en tension du contrôleur (90) n'est mise sous tension que si le message actuellement reçu (45) du bus (40) est destiné au poste d'abonné (1000).

12. Poste d'abonné (1000) selon la revendication 11, dans lequel l'interface de communication (11) est connectée au contrôleur (90), et dans lequel le poste d'abonné (1000) présente un sérialiseur (80) et/ou un désérialiseur (111) ainsi qu'en option un convertisseur numérique/analogique (70) et/ou un convertisseur analogique/numérique (75) qui sont conçus pour détecter au moins une grandeur d'état du contrôleur (90) et en option pour l'influencer.

13. Poste d'abonné (1000) selon la revendication 11 ou 12, dans lequel le contrôleur (90) est conçu pour générer le signal d'émission (TX), et/ou le dispositif d'émission/réception (12 ; 120) est conçu pour générer les messages (45 ; 46) de telle sorte qu'il existe une première phase de communication pour émettre les messages (45 ; 46) sur le bus (40) et une deuxième phase de communication suivante pour émettre les messages (45 ; 46) sur le bus (40), dans lequel la première phase de communication est prévue pour la négociation entre les postes d'abonné (10 ; 20, 30) du système de bus (1) pour savoir lequel des postes d'abonné (10 ; 20 ; 30) dispose dans la deuxième phase de communication suivante au moins temporairement d'un accès exclusif sans collision au bus (40) du système de bus (1).

14. Système de bus (1), comprenant
un bus (40),
au moins deux postes d'abonné (10 ; 20 ; 30 ; 100 ; 1000) qui sont reliés l'un à l'autre par le bus (40) de telle sorte qu'ils peuvent communiquer en série l'un avec l'autre, et dont au moins un poste d'abonné est un poste d'abonné (10 ; 100 ; 1000) selon l'une quelconque des revendications 7 à 13.

15. Procédé de communication dans un système de bus série (1), dans lequel le procédé est effectué par un dispositif d'émission/réception (12 ; 120) pour un poste d'abonné (10 ; 100 ; 1000) du système de bus série (1) qui présente un récepteur (121), un bloc d'évaluation (128) et une première borne (CRx ; CTx), le procédé présentant les étapes consistant à
recevoir en série, par le récepteur (121), un message (45) d'un bus (40) du système de bus (1),
évaluer, par le bloc d'évaluation (128), si le message reçu (45) est destiné au poste d'abonné (10 ; 100 ; 1000), et évaluer, par le bloc d'évaluation (128) si ainsi soit des données (452) du message reçu (45) sont à recevoir par le poste d'abonné (10 ; 100 ; 1000), soit si des données (452) d'un message du poste d'abonné (10 ; 100 ; 1000) sont à insérer par le dispositif d'émission/réception (12 ; 120) dans le message reçu (45) et à émettre sur le bus (40), et
sortir en série, par la première borne (CRx ; CTx), un signal à destination d'une interface de communication (10) du poste d'abonné (10 ; 100 ; 1000) pour le poste d'abonné (10 ; 100 ; 1000) sur la base de l'évaluation du bloc d'évaluation (128),
dans lequel le bloc d'évaluation (128) sort au niveau de la première borne (CRx ; CTx) toujours un flanc de signal du signal s'il résulte de l'évaluation du bloc d'évaluation (128) que le message reçu (45) est destiné au poste d'abonné (10 ; 100 ; 1000) et dans les données (452) du message reçu (45) un bit de données est présent actuellement, ou que le dispositif d'émission/réception (12 ; 120) doit insérer dans le message reçu (45) un bit de données des données (452) du message du poste d'abonné (10 ; 100 ; 1000).
